Europäisches Patentamt

European Patent Office

Office européen des brevets

(19)

(11) Numéro de publication: **0 159 224**
**B1**

(12) **FASCICULE DE BREVET EUROPEEN**

(45) Date de publication du fascicule du brevet:
08.02.89

(21) Numéro de dépôt: **85400455.3**

(22) Date de dépôt: **08.03.85**

(51) Int. Cl.⁴: **G 01 S 1/56, G 01 S 1/04**

(54) Circuit de décodage du préambule renforcé à balayage rapide d'un récepteur de bord MLS.

(30) Priorité: **13.03.84 FR 8403801**

(43) Date de publication de la demande:
**23.10.85 Bulletin 85/43**

(45) Mention de la délivrance du brevet:
**08.02.89 Bulletin 89/6**

(84) Etats contractants désignés:
**BE DE GB IT NL**

(56) Documents cités:
**EP-A- 0 083 534**
**US-A- 3 582 676**
**US-A- 4 099 124**

**L.R. RABINER et al.: "Theory and application of digital signal processing", 1975, pages 711-724, Prentice-Hall, Inc., Englewood Cliffs, New Jersey, US;**

(73) Titulaire: **LMT RADIO PROFESSIONNELLE, 46-47, Quai Alphonse Le Gallo, F-92103 Boulogne-Billancourt (FR)**

(72) Inventeur: **Schilliger, Michel, THOMSON-CSF SCPI 173, bld Haussmann, F-75379 Paris Cedex 08 (FR)**
Inventeur: **Hamzaoui, Salim, THOMSON-CSF SCPI 173, bld Haussmann, F-75379 Paris Cedex 08 (FR)**

(74) Mandataire: **Chaverneff, Vladimir et al, THOMSON-CSF SCPI 19, avenue de Messine, F-75008 Paris (FR)**

# Description

La présente invention se rapporte à un circuit de décodage du préambule renforcé à balayage rapide d'un récepteur de bord MLS.

La demande de brevet EP-A-129 471 décrit un procédé de protection contre le brouillage d'un système MLS («Microwave Landing System») selon lequel le faisceau battant de l'émetteur au sol émet un préambule supplémentaire pour chaque fonction ou groupe de fonctions, ce préambule supplémentaire, dit «préambule renforcé», étant constitué de paires d'impulsions servant à identifier les fonctions associées qui les suivent. Cette demande de brevet décrit également un récepteur de bord apte à recevoir, décoder et exploiter un tel préambule renforcé.

Le décodeur de ce récepteur de bord fonctionne correctement en l'absence de brouillage, mais n'est pas protégé contre le bruit en général, et les impulsions de brouillage en particulier.

La présente invention a pour objet un circuit de décodage de préambule renforcé à balayage rapide d'un récepteur de bord MLS, circuit de décodage qui soit efficacement protégé contre le bruit, et contre les impulsions de brouillage, tant que ces dernières ont une amplitude inférieure à celle des impulsions à recevoir ou ont une forme différente.

Le décodeur conforme à l'invention comporte un filtre numérique adapté aux impulsions utiles à recevoir. De façon plus détaillée, le décodeur de l'invention comporte un détecteur de crête, un circuit de commande automatique de gain, un filtre numérique suivi d'un circuit de reconnaissance de largeur d'impulsions, un circuit de sélection d'amplitude de crête d'impulsions, et un circuit de décodage de paires d'impulsions.

La présente invention sera mieux comprise à la lecture de la description détaillée d'un mode de réalisation pris comme exemple non limitatif et illustré par le dessin annexé, sur lequel:

- la figure 1 est un bloc diagramme simplifié d'un récepteur de bord MLS comportant le décodeur conforme à l'invention, et

- la figure 2 est un bloc diagramme détaillé du décodeur de la figure 1.

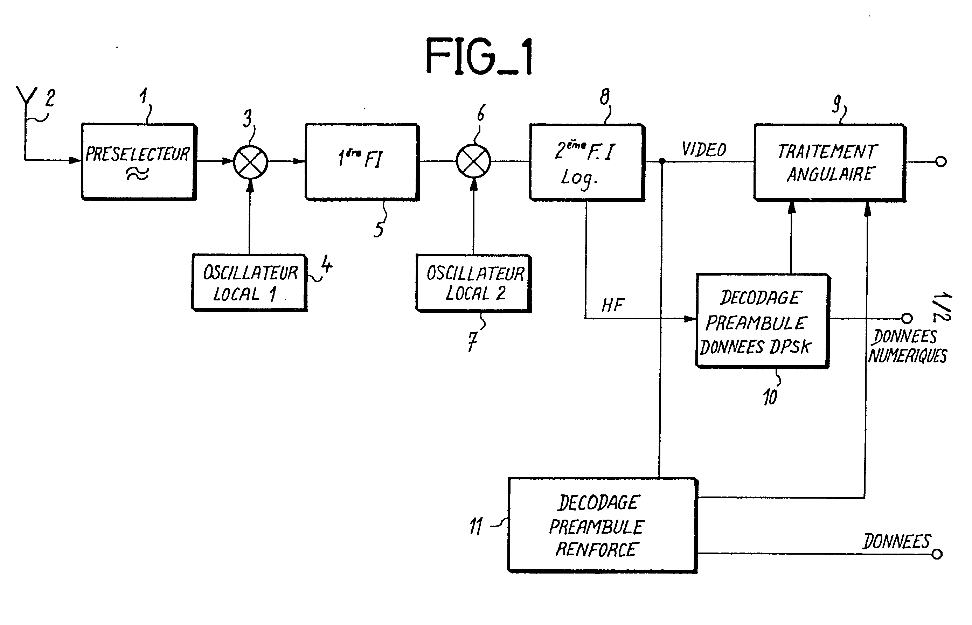

Le récepteur de bord MLS, représenté de façon simplifiée sur la figure 1, est bien connu en soi, et ne sera décrit que très brièvement, uniquement afin de situer l'emplacement du décodeur de préambule renforcé de l'invention.

Ce récepteur de bord comporte essentiellement et successivement un présélecteur d'entrée 1, relié à une antenne de réception 2, un premier mélangeur 3 relié à un premier oscillateur local 4, un premier amplificateur à fréquence intermédiaire 5, un second mélangeur 6 relié à un second oscillateur local 7, et un deuxième amplificateur à fréquence intermédiaire 8. L'amplificateur 8 est relié d'une part à un circuit 9 de traitement angulaire fournissant en sortie des valeurs d'angles d'azimut et de site, et d'autre part à un circuit 10 de démodulation de phase DPSK et de décodage de données et de préambule, fournissant au circuit 9 des signaux de synchronisation (référence de temps obtenue à partir d'une transition 0–1 du préambule normal).

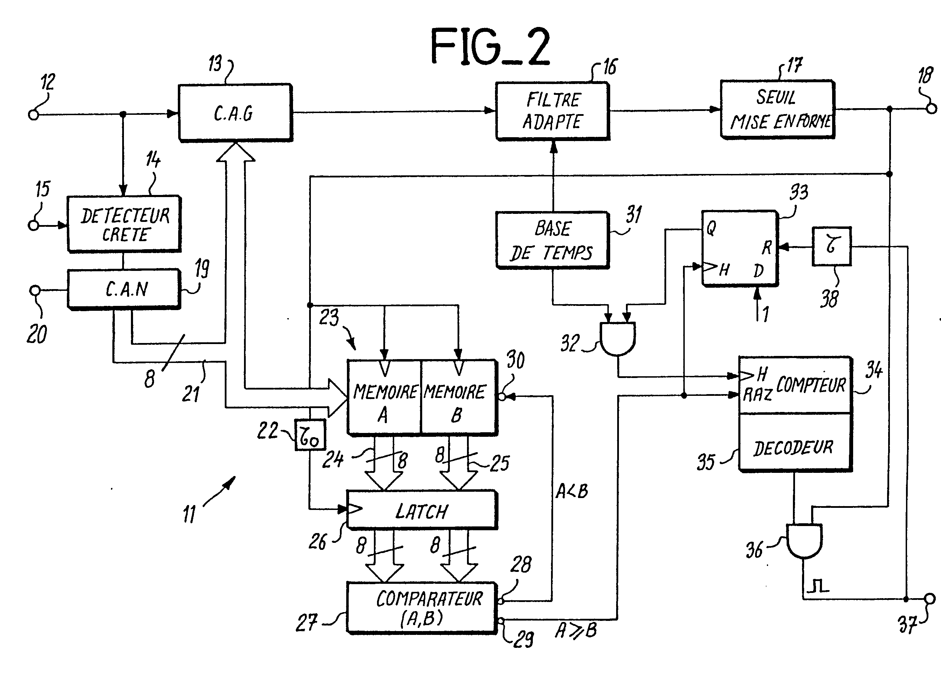

La sortie de l'amplificateur 8 est également reliée à un circuit 11 de décodage du préambule renforcé, décrit en détail ci-dessous en référence à la figure 2. La sortie de signaux de synchronisation (référence de temps obtenue à partir du préambule renforcé) du circuit 11 est reliée au circuit 9. Les éléments 1 à 10 étant bien connus, par exemple d'après la susdite demande de brevet, ne seront pas décrits plus en détail.

Le circuit 11 (figure 2) comporte une borne d'entrée 12 (reliée à la sortie de 8). L'entrée 12 est reliée, dans le circuit 11, à l'entrée d'un circuit 13 de correction automatique de gain (C.A.G.), ainsi qu'à l'entrée d'un circuit 14 détecteur de crête comportant une entrée 15 de commande de remise à zéro. Le circuit 13 est suivi d'un filtre numérique 16, par exemple du type transversal dont les coefficients de pondération sont déterminés, de façon connue en soi, pour adapter ce filtre aux impulsions utiles à recevoir, c'est-à-dire aux impulsions de balayage renforcé. Le circuit 16 est suivi d'un dispositif 17 de reconnaissance de largeur d'impulsions comportant un circuit de mise en forme à seuil d'amplitude fixe, un circuit de comptage comptant la durée des impulsions provenant de la sortie du filtre 16, un circuit logique permettant d'éliminer les impulsions n'ayant pas la largeur requise, et un circuit de mise en forme ramenant à une largeur constante toutes les impulsions ayant passé le filtre 16 et le circuit de seuil, la borne de sortie du circuit 17 étant référencée 18.

La sortie du détecteur de crête 14 est reliée à l'entrée analogique d'un convertisseur analogique-numérique (C.A.N.) 19 comportant une borne 20 de commande de conversion. La sortie numérique du convertisseur 19 est reliée à un bus numérique 21. Le bus 21 est relié par ailleurs au circuit 13 de CAG et à l'entrée du bloc 23 de mémorisation à décalage dans les deux sens. Selon un mode de réalisation préféré, le bloc 23 comporte huit registres à décalage bi-directionnel à deux cellules chacun. Chacun des conducteurs du bus 21 est relié à une entrée série d'un registre correspondant. La sortie de chacune des premières cellules des huit registres est reliée à un conducteur correspondant d'un bus 24, et la sortie de chacune des secondes cellules des huit registres est reliée à un conducteur correspondant d'un bus 25. Les huit premières cellules desdits registres forment une mémoire A à huit éléments binaires, et les huit secondes cellules forment une mémoire B à huit éléments binaires également.

Les bus 24 et 25 sont reliés via un registre (ou «latch») 26 à un comparateur logique 27. Le comparateur 27 comporte une sortie 28 active lorsque le contenu de la mémoire A est inférieur à celui de la mémoire B, et une sortie 29 active lorsque le contenu de A est supérieur ou égal à celui de B. La sortie 28 est reliée à l'entrée 30 de commande de décalage à gauche du bloc 23. La sortie du circuit 17 est reliée aux entrées de signaux d'horloge des mémoires A et B et via un circuit de retard 22 (de retard $\tau_o$) à l'entrée d'horloge du registre 26. Les éléments 23, 26, 27 forment ledit circuit de sélection d'amplitude de crête.

Le circuit 11 comporte un circuit 31 de base de temps (générateur de signaux d'horloge), relié au filtre 16 et à une entrée d'une porte ET 32 dont la deuxième entrée est reliée à la sortie Q d'une bascule bistable 33 de type D. La sortie 29 du comparateur 27 est reliée à l'entrée de signaux d'horloge de la bascule 33 et à l'entrée de remise à zéro d'un compteur 34. La sortie du compteur 34 est reliée à un décodeur d'état 35 dont la sortie, active lorsqu'un état déterminé a été détecté par le décodeur, est reliée à une entrée d'une porte ET 36 dont l'autre entrée est reliée à la sortie du circuit 17. La sortie de la porte 36 est reliée à une borne de sortie 37, ainsi que via un circuit à retard 38 à l'entrée R de remise à zéro de la bascule 33. L'entrée de données de la bascule 33 est forcée à «1».

Lorsqu'une première impulsion arrive depuis la sortie vidéo du récepteur MLS, sur la borne 12, l'amplitude de cette impulsion est normalisée par le circuit de CAG 13. En même temps, cette impulsion arrive au détecteur de crête 14, qui est remis à zéro après le passage de chaque impulsion par un circuit auxiliaire (non représenté) et dont la réalisation est évidente pour l'homme de l'art). Le détecteur 14 mémorise la valeur de crête de cette impulsion, et cette valeur de crête est convertie en valeur numérique par le convertisseur 19 commandé de façon classique par la borne 20. Si le circuit 17 reconnaît que ladite impulsion, après avoir traversé le filtre 16, a une largeur correcte, il produit sur la borne 18 un signal (par exemple un «1» binaire) indiquant que cette impulsion est bonne, et ce signal commande le chargement, en particulier dans la mémoire A, de ladite valeur de crête numérisée de ce signal. L'ancien contenu de la mémoire A passe dans la mémoire B.

Dès qu'une deuxième impulsion arrive sur la borne 12, et que sa largeur est reconnue bonne par le circuit 17, sa valeur de crête V2 est admise dans la mémoire A dont le contenu V1 est décalé dans la mémoire B, et après un retard $\tau_o$, les contenus des mémoires A et B sont admis dans le registre 26. (Le temps de retard $\tau_o$ est légèrement supérieur au temps nécessaire pour effectuer le décalage à droite). A ce moment, le registre 26 présente au comparateur 27, côté A la valeur V2 et côté B la valeur V1. Si V2 correspond à une vraie impulsion utile, V2 est sensiblement égale à V1, et le comparateur 27 envoie sur sa sortie 29 un signal «1» indiquant que la condition A > B est satisfaite (bien entendu, pour tenir compte des fluctuations de niveau des impulsions vraies reçues, la condition A < B n'est remplie que lorsque A est nettement inférieur à B).

Par ailleurs, l'entrée D de la bascule 33 étant forcée à «1», sa sortie Q passe à «1» au premier front actif arrivant sur son entrée d'horloge H (étant donné que l'on a supposé que le système MLS a déjà reçu au moins une impulsion vraie, la sortie 29 a déjà été active, et la sortie Q de la bascule 33 a pu passer à «1»). Les signaux d'horloge produits par le circuit 31 peuvent donc arriver à l'entrée H du compteur 34 qui compte au rythme de ces impulsions d'horloge. Chaque front actif apparaissant sur la sortie 29 du comparateur 27 remet à zéro le compteur 34.

Le décodeur 35 est chargé de reconnaître un état de comptage du compteur 34 correspondant au laps de temps séparant les crêtes de deux impulsions faisant partie d'une paire d'impulsions vraies. Etant donné que la porte ET 36 est reliée à la sortie du décodeur 35 et à la sortie du circuit 17, sa sortie n'est active que lorsque deux conditions sont remplies simultanément: écoulement dudit laps de temps et reconnaissance d'une impulsion vraie. Ainsi, si au bout de ce laps de temps aucune impulsion incidente n'est reconnue par les circuits 16 et 17, la sortie de la porte 36 reste inactive, et donc la bascule 33 ne change pas d'état, ce qui fait que les impulsions d'horloge de 31 continuent à passer par la porte 32 et à faire avancer le compteur 34.

Par contre, si après la remise à zéro du compteur 34 par une première impulsion de préambule renforcé reconnue vraie (celle dont la valeur de crête est V2 comme précisé ci-dessus,) une seconde impulsion est reconnue vraie exactement au bout dudit laps de temps, la porte 36 s'ouvre. Une impulsion de reconnaissance de paire d'impulsions de préambule renforcé est produite sur la borne 37 pour exploitation par des circuits de calcul appropriés (non représentés). En outre, cette impulsion de reconnaissance passe par le circuit à retard 38, dont le retard est sensiblement égal à la moitié de la durée d'une impulsion de préambule (ceci afin de ne pas arrêter le compteur 34 avant la fin de la deuxième impulsion de préambule). Au bout de ce temps de retard, la bascule 33 est remise à zéro, et sa sortie Q est forcée à «0», et ne pourra repasser à «1» qu'à l'arrivée d'un autre front actif sur son entrée H, c'est-à-dire lorsqu'une autre impulsion de préambule renforcé (faisant partie d'une paire suivante) aura été reconnue vraie. Le comptage du compteur 34 est alors inhibé.

Dans le cas où, après ladite impulsion de balayage renforcé ayant la valeur de crête V2, survient une impulsion de forme reconnue correcte par les circuits 16 et 17, mais d'amplitude insuffisante (de valeur de crête V3 < V2), la valeur V2 est décalée dans la mémoire B et la valeur V3 est mémorisée dans la mémoire A. A l'arrivée d'une autre impulsion de balayage de forme reconnue correcte, le registre 26 présente les valeurs V3 et V2 au comparateur 27 dont la sortie 28 devient active et commande le décalage à gauche du bloc 23, c'est-à-dire que la valeur V3 est perdue et que la valeur V2 repasse dans la mémoire A. Par conséquent, le circuit comportant en particulier les éléments 23, 26 et 27 est un circuit de mémorisation ou sélection de valeur de crête maximale d'impulsion validée (par les circuits 16 et 17, c'est-à-dire ayant une largeur correcte), ce qui fait que ce circuit de sélection rejette toutes les impulsions de forme correcte, mais n'ayant pas une amplitude suffisante.

A la mise en route du dispositif de l'invention, ou tant qu'il n'a pas reçu d'impulsions de forme correcte, le contenu des mémoires A et B est nul de même que l'état de comptage de 34 (ou peut être rendu nul par des circuits d'initialisation appropriés classiques). La valeur de crête de la première impulsion incidente de forme correcte est mémorisée dans la mémoire A. La seconde impulsion incidente de forme correcte valide le registre 26 qui présente au comparateur le contenu initial de A transféré dans B, qui est nul, et la valeur de crête de la première impulsion incidente. La sortie 29 du comparateur est donc activée et commande le basculement de la bascule 33, donc le début du comptage de 34. Ensuite, tout se passe de façon décrite ci-dessus, et en particulier si ladite deuxième impulsion incidente est reconnue vraie, un signal de reconnaissance de paire d'impulsions de balayage est envoyé sur la borne 37.

Le décodeur décrit ci-dessus permet donc d'éliminer aussi bien les impulsions parasites, reçues d'un brouilleur intentionnel ou non, ayant une largeur incorrecte par rapport à la largeur nominale des impulsions utiles, que les paires d'impulsions de largeur correcte mais n'ayant pas un espacement correct ou n'ayant pas le même niveau.

Ce décodeur convient pour divers types de balayage, en particulier le balayage quadruple et triple. Dans le cas du balayage quadruple, la référence de temps, calculée par les circuits branchés en aval de la borne 37, correspond à l'instant situé au milieu des deux paires d'impulsions ou à un instant décalé d'une valeur fixe par rapport à ce milieu. Si le balayage triple était utilisé, la référence serait située au milieu des deux dernières impulsions correspondant aux balayages aller puis retour.

## Revendications

1. Circuit de décodage du préambule renforcé à balayage rapide dun récepteur de bord MLS, du type comportant un filtre numérique (16) adapté aux impulsions utiles à recevoir, caractérisé par le fait qu'il comporte, reliés à l'entrée, un détecteur de crête (14), et un circuit de commande automatique de gain (13) relié audit filtre numérique qui est suivi d'un circuit de reconnaissance de largeur d'impulsions (17), le circuit détecteur de crête étant suivi d'un circuit de sélection d'amplitude de crête d'impulsions (23) lui-même suivi d'un circuit de décodage de paires d'impulsions (32, 33, 34, 35, 36, 38).

2. Circuit de décodage selon la revendication 1, caractérisé par le fait que ledit circuit de reconnaissance de largeur d'impulsions (17) comprend un circuit de mise en forme à seuil d'amplitude fixe, un circuit de comptage, un circuit logique d'élimination d'impulsions n'ayant pas la largeur requise, et un circuit de mise en forme ramenant à une largeur constante toutes les impulsions qui lui parviennent.

3. Circuit de décodage selon la revendication 1 ou 2, caractérisé par le fait que le circuit de sélection d'impulsions comporte un bloc de mémorisation à registres à décalage bidirectionnel à deux cellules chacun (23) suivi d'un registre de type «latch» (26) et d'un comparateur logique (27) dont une sortie est reliée à l'entrée de commande de décalage à gauche du bloc de mémorisation, les entrées d'horloge des registres à décalage du bloc de mémorisation et du registre «latch» étant reliées à la sortie du circuit de reconnaissance de largeur d'impulsions.

4. Circuit de décodage selon l'une quelconque des revendications 1 à 3, caractérisé par le fait que le circuit de décodage de paires d'impulsions comprend un compteur (34) dont l'entrée de remise à zéro est reliée à la sortie du comparateur qui est active lorsqu'il reconnaît des impulsions de niveau de crête correct, et dont l'entrée de signaux d'horloge est reliée à la sortie d'une porte ET (32) elle-même reliée à une base de temps (31) et à la sortie d'une bascule bistable type D dont l'entrée de données est forcée à «1» et dont l'entrée de remise à zéro est reliée par un circuit à retard (38) à la sortie d'une autre porte ET (36) elle-même reliée à la sortie d'un décodeur (35) d'états dudit compteur (34) et à la sortie dudit circuit de reconnaissance de largeur d'impulsions (17).

5. Circuit de décodage selon la revendication 4, caractérisé par le fait que le retard dudit circuit à retard (38) est sensiblement égal à la demi-durée des impulsions utiles à recevoir.

## Patentansprüche

1. Schaltkreis zum Dekodieren der verstärkten Präambel mit schneller Abtastung für einen MLS-Bordempfänger, mit einem an die zu empfangenden Nutzimpulse angepassten Digitalfilter (16), dadurch gekennzeichnet, dass der Schaltkreis einen an den Eingang angeschlossenen Spitzenwertdetektor (14) und einen an das Digitalfilter angeschlossenen selbstregelnden Verstärkerkreis (13) umfasst, auf den ein Impulsbreitenerkennungskreis (17) folgt, während auf den Spitzenwertdetektor ein Impuls-Spitzenamplituden-Wählkreis (23) folgt, dem seinerseits ein Impulspaardekodierkreis (32, 33, 34, 35, 36, 38) nachgeschaltet ist.

2. Dekodierkreis nach Anspruch 1, dadurch gekennzeichnet, dass der Impulsbreitenerkennungskreis (17) einen Formgebungskreis mit festem Amplitudenschwellwert, einen Zählkreis, einen logischen Kreis zur Eliminierung von Impulsen ohne die geforderte Breite und einen Formgebungskreis aufweist, der alle an ihn gelangenden Impulse auf eine konstante Breite bringt.

3. Dekodierkreis nach Anspruch 1 oder 2, dadurch gekennzeichnet, dass der Impulswählkreis einen Speicherblock mit bidirektionalen, jeweils zweizelligen Schieberegistern (23) umfasst, auf den ein Register vom Typ «latch» (26) und ein logischer Komparator (27) folgen, der mit einem Ausgang an den Linksverschiebungssteuereingang des Speicherblocks angeschlossen ist, während die Takteingänge der Schieberegister des Speicherblocks und des «latch»-Registers an den Ausgang des Impulsbreitenerkennungskreises angeschlossen sind.

4. Dekodierkreis nach einem der Ansprüche 1 bis 3, dadurch gekennzeichnet, dass der Impulspaardekodierkreis einen Zähler (34) besitzt, dessen Nullsetzeingang an denjenigen Ausgang des Komparators geschaltet ist, welcher aktiv ist, wenn er Impulse mit dem richtigen Spitzenniveau erkennt, und dessen Taktsignaleingang an den Ausgang eines UND-Tores (32) geschaltet ist, das seinerseits mit einer Zeitbasis (31) sowie mit dem Ausgang einer bistabilen Kippstufe vom Typ D verbunden ist, deren Dateneingang auf «1» gesteuert ist und deren Nullsetzeingang über einen Verzögerungskreis (38) an den Ausgang eines weiteren UND-Tores (36) angeschlossen ist, das seinerseits mit dem Ausgang eines Statusdekoders des Zählers (34) sowie mit dem Ausgang des Impulsbreitenerkennungskreises (17) verbunden ist.

5. Dekodierkreis nach Anspruch 4, dadurch gekennzeichnet, dass die Verzögerung des Verzögerungskreises (38) im wesentlichen gleich der halben Dauer der zu empfangenden Nutzimpulse ist.

## Claims

1. A circuit for decoding the reinforced preamble, with rapid scanning, of an MLS-type airborne receiver, comprising a digital filter (16) adapted to the useful pulses to be received, characterized in that it comprises, connected to the input, a peak detector (14) and an automatic gain control circuit (13), connected to said digital filter, which is succeeded by a pulse width recognition circuit (17), the peak detector circuit being succeeded by a pulse peak amplitude selection circuit (23), which in turn is followed by a pulse pair decoding circuit (32, 33, 34, 35, 36, 38).

2. A decoding circuit according to claim 1, characterized in that said pulse width recognition circuit (17) comprises a shaping circuit with a fixed amplitude threshold, a counting circuit, a logic circuit for eliminating pulses not having the required width, and a shaping circuit giving all pulses a constant width which are received by it.

3. A decoding circuit according to claim 1 or 2, characterized in that the pulse selection circuit comprises a storage block of bidirectional shift registers (23) of two cells each, followed by a «latch»-type register (26) and a logic comparator (27), of which an output is connected to the lefthand shifting control input of the storage block, whereas the clock inputs of the shift registers of the storage block and of the «latch» register are connected to the output of the pulse width recognition circuit.

4. A decoding circuit according to any one of the claims 1 to 3, characterized in that the pulse pair decoding circuit comprises a counter (34), whose reset-to-zero input is connected to the output of the comparator which is active when it recognizes pulses having the desired peak level, and whose clock signal input is connected to the output of an AND gate (32), which in turn is linked to a time base (31) and to the output of a bistable D-type stage, whose date input is controlled to stauts «1» and whose reset-to-zero input is linked via a delay circuit (38) to the output of another AND gate (36), which in turn is connected to the output of a decoder (35) of the states of said counter (34) and to the output of said pulse width recognition circuit (17).

5. A decoding circuit according to claim 4, characterized in that the delay of said delay circuit (38) is substantially equal to half the duration of the useful pulses to be received.

FIG_1

EP 0 159 224 B1

# FIG_2